# EUROPEAN PATENT SPECIFICATION

(11) **EP 3 715 692 B1**
(45) Date of publication and mention of the grant of the patent: **20.04.2022**
(21) Application number: 20163480.5
(22) Date of filing: 17.03.2020
(51) Int. Cl.: F16L 37/098, F16L 37/092, F16L 25/00, F16L 37/091, F16L 37/56, F16L 25/01, D06F 39/08

(54) **A NON-DEMOUNTABLE CONNECTION SYSTEM FOR CONNECTING A FLEXIBLE HOSE TO A HYDRAULIC DEVICE**
UNZERLEGBARES VERBINDUNGSSYSTEM FÜR DIE VERBINDUNDUNG EINES FLEXIBLEN SCHLAUCHES MIT EINEM HYDRAULISCHEN GERÄT
SYSTEME DE CONNEXION INDEMONTABLE POUR LA CONNEXION D'UN TUYAU SOUPLE A UN DISPOSITIF HYDRAULIQUE

(30) Priority: 20.03.2019 IT 201900004055
(43) Date of publication of application: 30.09.2020
(60) Divisional application: 21164804.3
(73) Proprietor: BITRON S.p.A., 10122 Torino (IT)
(72) Inventor: ALLAMANDO, Luca, 12017 ROBILANTE (Cuneo) (IT); RIVERO, Davide, 12029 SAN DAMIANO MACRA (Cuneo) (IT); DELFINO, Riccardo, 12023 CARAGLIO (Cuneo) (IT)
(74) Representative: Vanzini, Christian

(56) References cited:
- WO-A1-94/21953
- WO-A1-2015/008198
- GB-A- 2 331 564
- US-B2- 9 261 214

## Description

The present invention generally relates to connection systems for flexible hoses.

A particular field of application for the present invention is that of anti-flooding devices for washing machines or in any case for household appliances connected to the water supply network, such as refrigerators that produce ice or ovens with steam production systems used for cooking food or other. These devices are generally placed between a water supply source and the washing machine or in general the household appliance.

The use of a washing machine generally entails the risk of flooding the premises where the machine is installed due to accidental liquid leaks. Such leaks may for example be due to malfunctions of the inner devices of the machine or breakages of the hoses that convey the liquid.

In this regard, anti-flooding devices are known which allow continuous monitoring of the presence of any leaks. These devices generally provide at least one valve, located upstream of a water supply hose, and a sensor sensitive to the presence of liquid and suitably positioned to detect any leaks and thus cause a valve actuation which interrupts the liquid supply.

The valves used for this purpose are typically operated electrically, mechanically or pneumatically, and the sensors are generally of the electromechanical or mechanical type.

Some specific solutions of anti-flooding devices provide a pair of flexible hoses arranged one inside the other and mechanically connected to a connector body, in which the valve is arranged. In the connector body there is a conduit in fluid communication with the inner hose which serves for the supply of water, while the sensor is positioned in the annular space between the two hoses so as to allow detection of any leaks.

Various solutions are known for connecting the inner hose to the conduit of the connector body. One of these solutions, known from EP 1 798 326 A, provides a molded connector on the inner hose, which is coupled by interference on a distal part of the conduit of the connector body.

This solution is difficult from a production point of view, and therefore relatively expensive, due to the co-molding process.

WO 2015/008198 A1 discloses a connection system according to the preamble of claim 1, which is applied to a corrugated hose. WO 94/21953 A1, GB 2331564 A and US 9261214 B2 disclose connection systems according to the preamble of claim 1, which are applied to bare hoses.

An object of the present invention is to provide an alternative connection system which is less complex than that of EP 1 798 326 A from the production point of view, and therefore more cost-effective. More generally, an object of the present invention is to provide a non-demountable connection system for connecting a flexible hose to a hydraulic device.

The present invention therefore relates to a non-demountable connection system for connecting a flexible hose to a hydraulic device, having the features of claim 1.

Preferably, the proximal shoulder is arranged at an axial distance from the distal shoulder approximately equal to the axial distance of the snap fitting seat from the distal edge of the female tubular part.

In the system according to the invention, the connection between the flexible hose and the female tubular part is obtained by means of a simple snap device carried by the male tubular part which may be a separate component in which the hose is inserted, or it may be made in one piece with the hose.

By virtue of the particular arrangement of the shoulders, there is actually no axial clearance between the female part and the male part, thus obtaining a precise positioning of the components and in particular of the sealing ring. The system according to the invention also allows the straightness of the hose to be maintained, in particular in the working area of the sealing ring, and therefore an effective sealing of the system. In this way the risk is avoided that a possible bending of the hose in the proximity of the female tubular part jeopardizes the quality of the hydraulic seal and the mechanical coupling between the parts. It is also worth noting that the technical effects described above are obtained with a few simply manufactured components.

According to the invention, a flare is formed on an inner surface of the lateral wall of the female tubular part, the sealing ring being adapted to be arranged axially between a proximal edge of the male tubular part and said flare.

The system further comprises a gripping member comprising a plurality of elastic jaws for gripping an outer surface of the hose.

The gripping element is a component separate from the male tubular part. In this case, the gripping element is arranged axially between a proximal edge of the male tubular part and a flare obtained on an inner surface of the lateral wall of the female tubular part, and the sealing ring may be arranged axially between the proximal edge of the male tubular part and the gripping element. This arrangement causes the sealing ring to act on a portion of the surface of the hose which has not been marked by any scratches induced by the gripping member, with consequent advantage from the point of view of sealing the system.

The gripping member may be of plastic material, metallic material, or a combination of said materials. In particular, the jaws may be carried by an insert on which the gripping element is co-molded.

According to an embodiment, the hose may be of a type which has a smooth radially outer surface; in this case, the male tubular part may consist of a sleeve through which the hose is inserted. According to a particularly preferred embodiment, the hose may be of a type which has a radially inner surface on which at least one longitudinal rib is formed.

According to another embodiment, the hose is a corrugated hose. In a specific variant, the male tubular part may consist of a sleeve through which the hose is inserted, and wherein the jaws are configured to grip the hose between adjacent waves of the corrugated hose.

In general, the hydraulic device to be connected to the flexible hose may be any device known to those skilled in the art. Specifically, it may be in particular a valve, for example the valve of an anti-flooding device, or a water supply and/or treatment device inside a washing machine. By water treatment device, as known in the art, we mean a system which, by virtue of ion exchange resins, allows the washing water to be softened (softener).

Another object of the invention is an anti-flooding device for a washing machine, the device comprising a connector body, a first flexible hose and a second flexible hose, wherein in the connector body there is defined a conduit in fluid communication with the first hose, the first hose being provided for conveying water, wherein the first hose extends longitudinally within the second hose in such a way to define an annular gap between the two hoses, adapted to receive any possible water leakage, and wherein the first flexible hose is connected to the conduit through a connection system according to the invention.

Further features and advantages of the invention will become apparent from the detailed description that follows, provided purely by way of non-limiting example with reference to the accompanying drawings, in which:
figure 1 is a sectional view of an anti-flooding device provided with a connection system according to the invention;
figure 2 is an enlarged-scale view showing the connection system;
figure 3 is a sectional view of a female part of the connection system of figure 2;
figure 4 is a perspective view of a flexible hose of the anti-flooding device of figure 1;
figure 5 is a perspective view of a male tubular part of the connection system of figure 2;
figure 6 is a perspective view of a gripping member of the connection system of figure 2;
figure 7 is a perspective view of a gripping member of other embodiments of the connection system, illustrated in figures 8-10;
figures 8-9 are sectional views which represent different embodiments of the invention, and figure 10 is a sectional view representing an example not according to the invention;
figures 11 and 12 are sectional views of a male tubular part and a connection system according to further examples not according to the invention;
figures 13 and 14 are a sectional view of a connection system and a perspective view of a male tubular part according to another example not according to the invention, applied to a corrugated hose;
figures 15 and 16 are a perspective view and a sectional view of a corrugated hose according to a further example not according to the invention; and
figure 17 is a sectional view of a connection system according to the invention, applied to a water supply device of a washing machine.

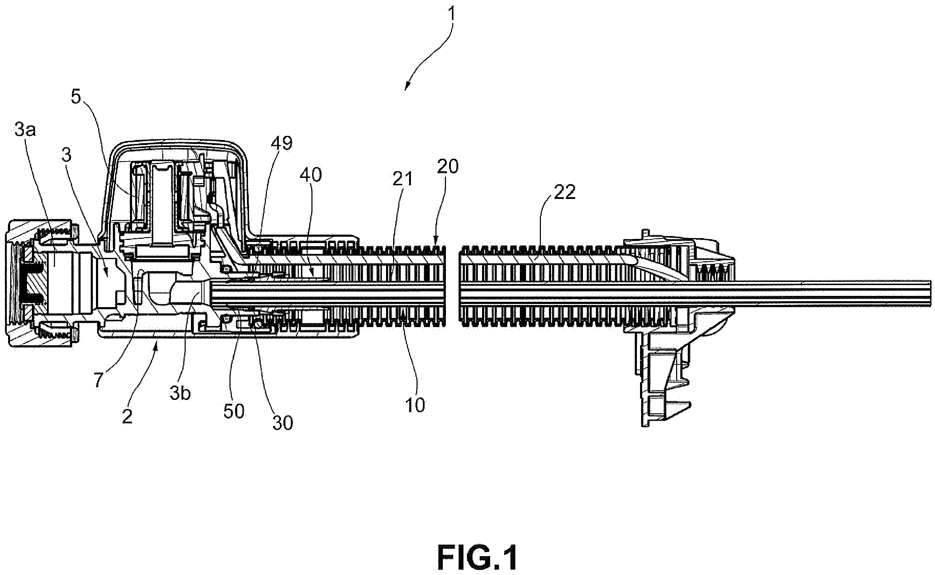

With reference to figure 1, an anti-flooding device is indicated as a whole with reference numeral 1. The device 1 comprises a connector body 2, a water supply hose, or inner hose 10, and an outer hose 20.

The connector body 2 is generally made of plastic, and a conduit 3 is defined therein. The conduit 3 has an inlet 3a and an outlet 3b, between which valve means (not shown) are interposed for interrupting the flow of liquid between the inlet 3a and the outlet 3b. In the illustrated example, these means comprise a solenoid valve, the presence of which is indicated by a winding 5. The solenoid valve comprises a shutter member adapted to engage a corresponding seat 7 and operated by a movable core arranged inside the winding 5. Elastic means (not shown) keep the movable core and/or the shutter member in a rest position, at which the shutter member stops the flow of liquid through the conduit 3. When the solenoid is excited, the movable core is brought, against the action of the elastic means, to a position where the shutter member allows the flow of liquid through the conduit 3.

At the inlet 3a, the connector body 3 is configured to connect the device to a water supply source, such as a tap (not shown). At the outlet 3b the connector body 3 comprises a tubular female part 30, through which the outlet 3b is made.

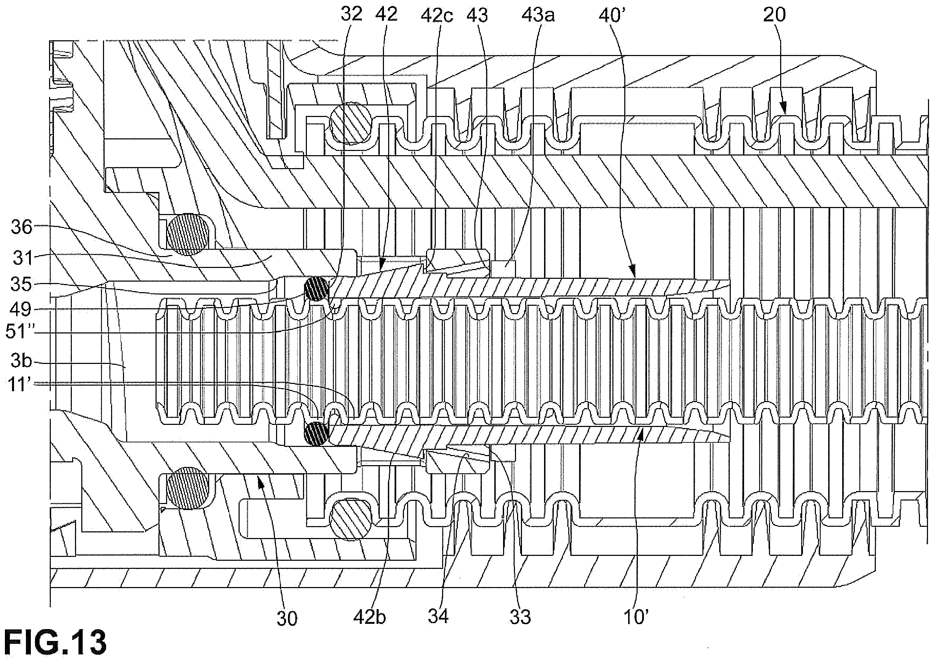

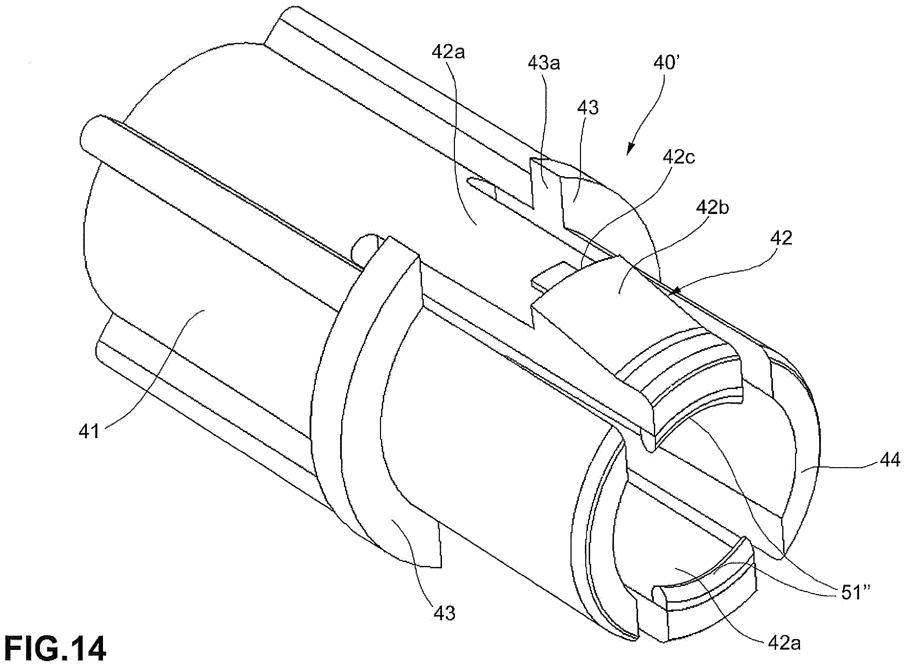

The inner hose 10 is connected to the female tubular part 30, by means of a non-demountable connection system which will be described below. Such an inner hose 10 may be a smooth hose, i.e. a hose having a smooth outer surface, as represented in figures 1-12, or a corrugated hose as represented in figures 13-17.

The outer hose 20 is also connected to the connector body in a per se known manner. The outer hose 20 may be in particular a corrugated hose, and encloses or at least partially surrounds the inner hose 10 and has the function of collecting and/or conveying a water leak in case of breakage of the inner hose 10 or of undesired leaks from the connector body 2 or from the connection between the inner hose 10 and the connector body 2. An annular gap 21 is therefore defined between the two hoses 10, 20 suitable for receiving the water leak. In the embodiment illustrated in figure 1, an electrical cable 22 extends into the annular gap 21, the conductors of which are connected to respective terminals of the winding 5 of the solenoid valve. The opposite ends of the electric cable 22 are adapted to be connected to a control circuit of the device or to a control system of the washing machine (not shown), which may comprise a sensor for detecting the water leak of the known type. However, the methods of detecting the water leak and the type of control of the anti-flooding device 1 are not essential for the purposes of the present invention.

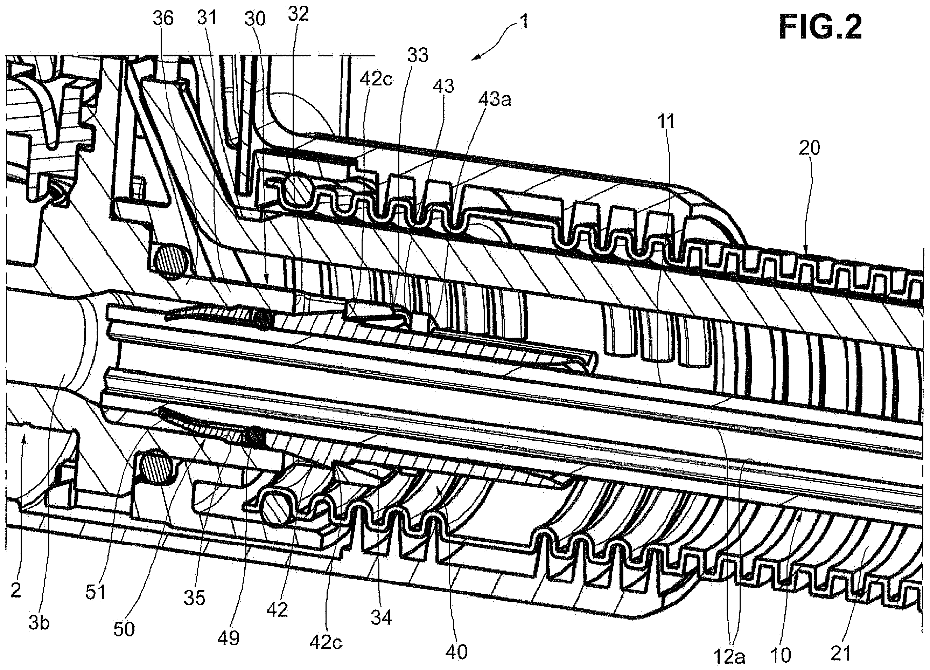

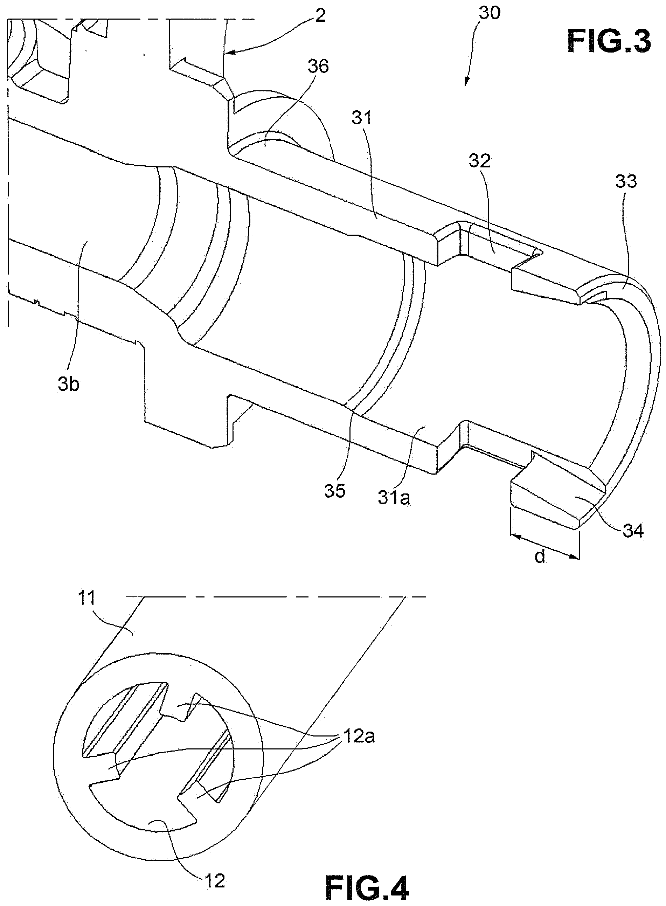

With particular reference to figures 2-6, a first embodiment of a non-demountable connection system for connecting the inner hose 10 to the female tubular part 30 of the connector body 2 is now described. As may be seen in figure 4, the hose 10 is a smooth hose, i.e. a hose which has a smooth outer surface 11. In the illustrated example, the hose 10 has an inner surface 12 on which one or more longitudinal ribs 12a protruding inwardly are formed. This gives the hose 10 a particular resistance to bending and crushing which prevents the walls of the hose from collapsing when it is bent with a small radius of curvature. However, this measure is not essential for the purposes of the invention, since the inner surface 12 of the hose may also be smooth, and the anti-crushing feature may possibly be achieved in another way known to the man skilled in the art.

The connection system comprises the female tubular part 30, shown individually in figure 3. The female tubular part 30 comprises a cylindrical lateral wall 31 in which one or more snap fitting openings or seats 32 are formed. Reference numeral 31a on the other hand indicates a radially inner surface of the female tubular part 30. The seats 32 are arranged at a given axial distance from a distal edge 33 of the female tubular part 30, indicated with d in figure 3. In the present description, the terms "proximal" and "distal" are defined considering the central part of the connector body 2 as the point of origin. On the inner surface 31a of the tubular part 30 there are formed, between the seats 32 and the distal edge 33, one or more inclined planes 34 arranged axially aligned with the respective seats 32. Furthermore, on the inner surface 31a of the tubular part 30 a flare 35 is formed, arranged in a more proximal position, or upstream, with respect to the seats 32. Therefore, the diameter of the inner surface 31a of the tubular part 30 in the section between the flare 35 and the end edge 33 ("distal" or "downstream" section) is greater than the diameter of the inner surface 31a in the section between the proximal end 36 of the tubular part 30 and the flare 35 ("proximal" or "upstream" section).

The connection system further comprises a male tubular part 40 associated to the hose 10 and fittable in the female tubular part 30, which male tubular part in the illustrated example consists of a sleeve of plastic material through which the hose 10 is fitted.

The male tubular part or sleeve 40 comprises a cylindrical lateral wall 41 on the outer side of which one or more projections 42 projecting outwardly are formed, and arranged at a proximal end of the sleeve 40. The projections 42 are configured to engage elastically in the snap fitting seats 32 when the sleeve 40 is fitted into the female tubular part 30. In particular, the projections 42 are made as teeth carried by elastic flaps 42a formed in the lateral wall 41 of the sleeve 40. The projections 42 have an inclined surface 42b facing the proximal end of the sleeve 40, and a shoulder 42c, hereinafter referred to as the "proximal shoulder," which faces the distal end of the sleeve 40.

On the outer side of the cylindrical side wall 41 there is also formed a distal shoulder 43 configured to be positioned in front of the distal edge 33 of the female tubular part 30 when the sleeve 40 is fitted into the female tubular part 30. In the illustrated example, the distal shoulder 43 is carried by collar portions 43a extending outwardly from the lateral wall 41 of the sleeve 40. The distal shoulder 43 is opposed to the proximal shoulder 42c.

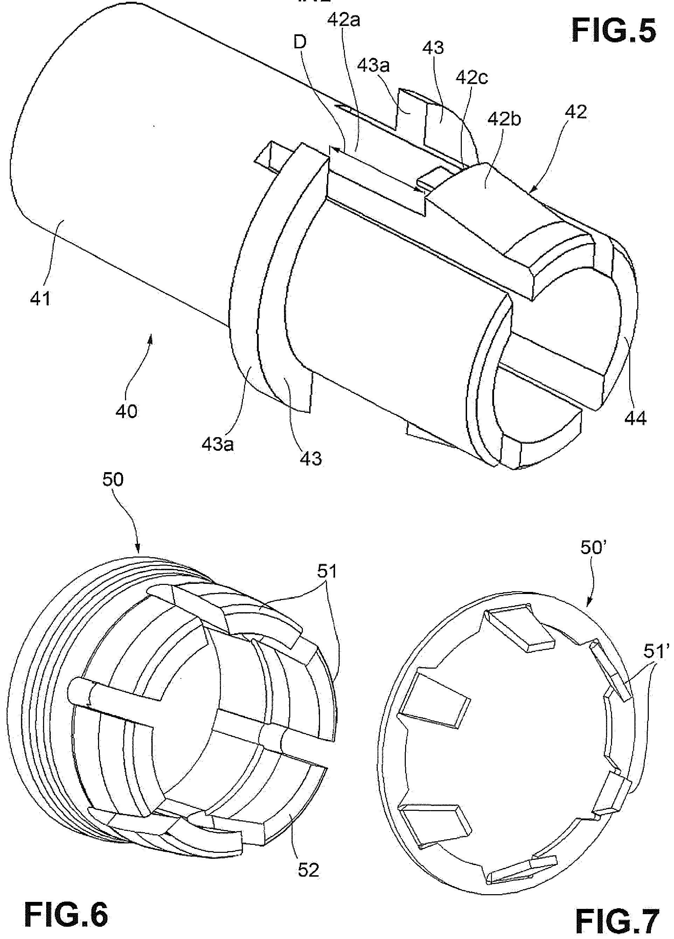

The proximal shoulder 42c is arranged at an axial distance D from the distal shoulder 43 (shown in figure 5) approximately equal to the axial distance d of the snap fitting seat 32 from the distal edge 33 of the female tubular part 30.

The connection system further comprises at least a sealing ring 49, specifically an O-ring, radially interposable between the inner hose 10 and the female tubular part 30. As may be seen in figure 2, the sealing ring 49 is adapted to be arranged axially between a proximal edge 44 of the male tubular part 40 and the flare 35.

The connection system further comprises a gripping member 50, which in the example of figures 2-6 is made as a bush of plastic material provided, on the proximal end thereof, with a plurality of elastic jaws 51 for gripping the outer surface 11 of the hose 10. At the jaws 51, the inner diameter of the bush tapers so that, at the proximal edge 52 of the gripping member 50, such an inner diameter is smaller than the outer diameter of the hose 10.

The gripping member 50 is adapted to be arranged axially between the proximal edge 44 of the male tubular part and the flare 35 of the lateral wall 31a of the female tubular part 30, and the sealing ring 49 is adapted to be arranged axially between the proximal edge 44 of the male tubular part 40 and the gripping member 50.

For the installation of the connection system, it may be provided that the gripping member 50 and the sealing ring 49 are initially positioned within the female tubular part 30. The hose 10 is then inserted to a desired depth within the female tubular part 30. Due to the gripping of the jaws 51 of the gripping member 50 and the interference with the sealing ring 49, the hose 10 may drag with it the gripping member 50 and the sealing ring 49 for a certain length, until the latter abut against the flare 35. Once this position is reached, the hose 10 may still slide with respect to the gripping member 50.

Once the desired position for the hose 10 is reached, the sleeve 40 is slid over the hose 10, until the projections 42b bend due to the wedging in the inclined planes 34 (by virtue of the compliance of the flexible hose 10), and then snap into the respective fitting seats 32, and the distal shoulder 43 abuts against the distal edge 33 of the female tubular part. Upon reaching this position, the sleeve 40 pushes the gripping member 50 and the sealing ring 49 against the flare 35. Due to their tapered shape, the jaws 50 of the gripping member 50 are wedged into the flare 35 and are then tightened against the outer surface 11 of the hose 10, while the sealing ring 49 is compressed axially and expands transversely. An effective mechanical and hydraulic seal of the system is therefore obtained. It should be noted that the length of the sleeve 40 is at least equal to the diameter of the hose 10, and preferably equal to a multiple greater than 1 of the hose 10. This ensures that any bending of the hose 10 in the vicinity of the connection does not adversely affect the effectiveness of the connection system.

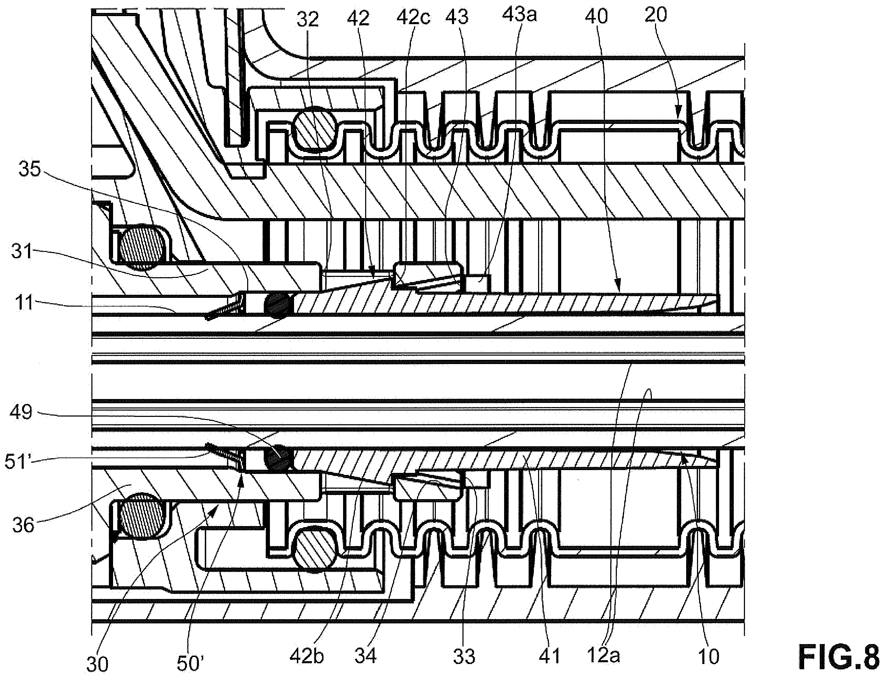

Figures 7 and 8 show another embodiment of the invention, in which the gripping member has a different structure. The same reference numbers have been assigned to elements corresponding to the above embodiment.

As may be seen, the gripping member, indicated here with reference numeral 50', is made as a washer of metallic material, and comprises a plurality of jaws 51' configured and operating in a similar way to those of the previous embodiment. For clarity, it should be noted that, contrary to what is shown in figure 8, in the real situation the washer 50' and the sealing ring 49 are compressed between the flare 35 and the proximal edge 44 of the sleeve 40, exactly as in the previous embodiment.

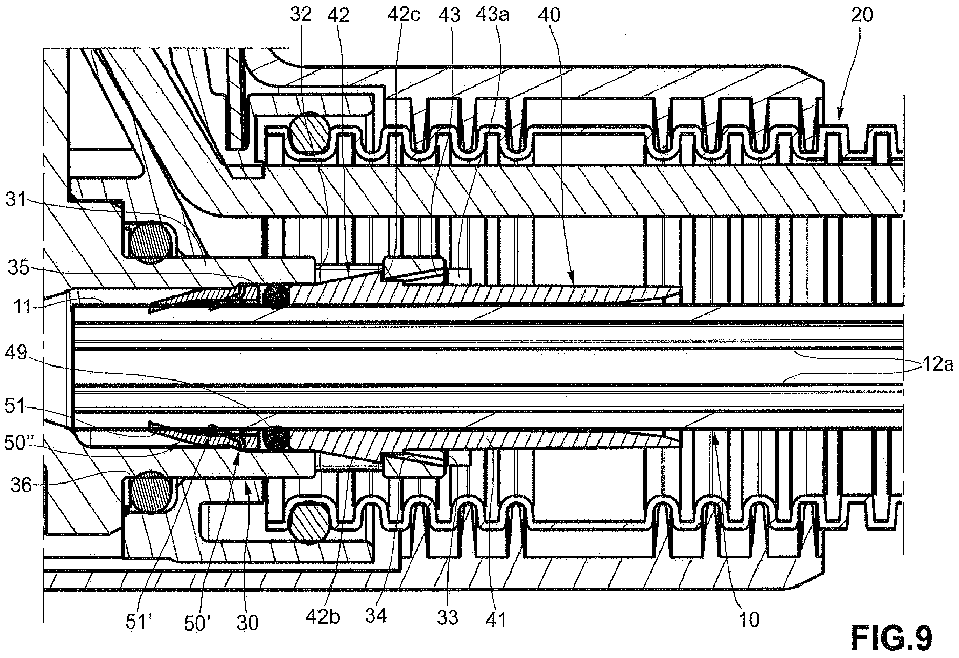

Figure 9 shows another embodiment of the invention, in which the gripping member has a different structure. The same reference numbers have been assigned to elements corresponding to the above embodiment.

As may be seen, the gripping member, indicated here with reference numeral 50", is made as a bush of plastic material configured in a similar way to that of the embodiment of figure 2, in which however a washer of metallic material similar to that of the embodiment of figure 8. This may be achieved by co-molding. The element 50" therefore has a series of plastic jaws 51 and a series of metal jaws 51'. For the rest, the methods of installation and operation are similar to those of the previous embodiments.

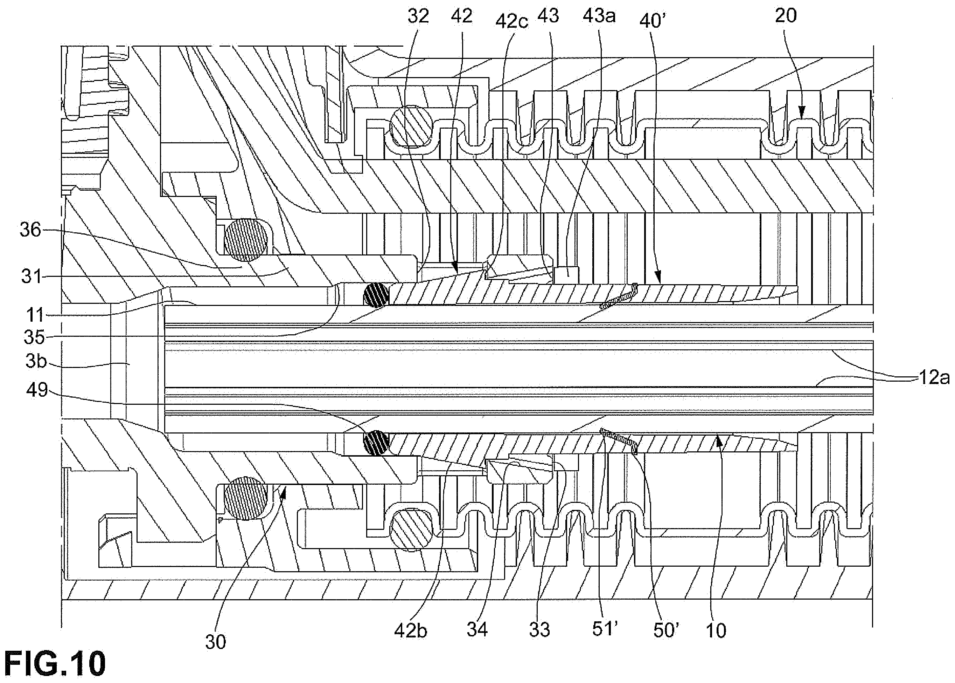

Figure 10 shows an example not according to the invention, in which the gripping member 50', made as a metal washer, is incorporated as an insert in the sleeve, indicated with reference numeral 40', in an intermediate position thereof. This may be achieved by co-molding. The same reference numbers have been assigned to elements corresponding to the above embodiments. As the man skilled in the art will appreciate, the installation methods are different from those of the previous embodiments.

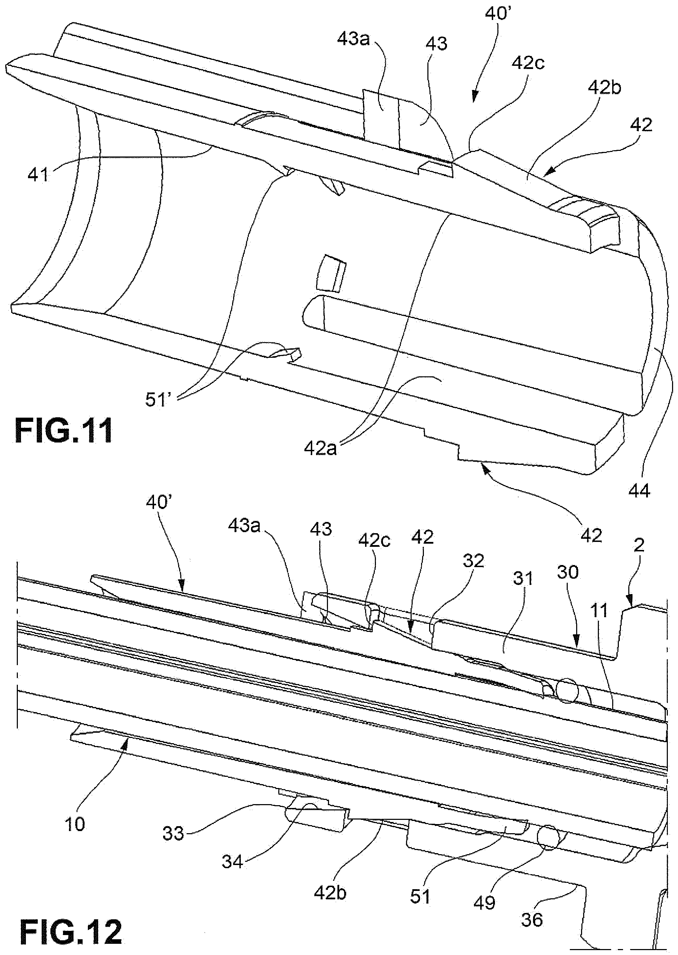

Figure 11 shows another example not according to the invention, in which the gripping member is made as a part of the same material as the sleeve 40'. In particular, the jaws 51' are made in one piece with the sleeve 40', and arranged in a similar way to that of the embodiment of figure 10.

Figure 12 shows another example not according to the invention, in which the gripping member is made as a proximal part of the sleeve 40'. In particular, the jaws 51 are made in one piece with the sleeve 40', and arranged at the proximal end of the sleeve 40'.

Figures 13 to 16 show other examples of the connection system, not according to the invention, applied to a corrugated hose, indicated with reference numeral 10'.

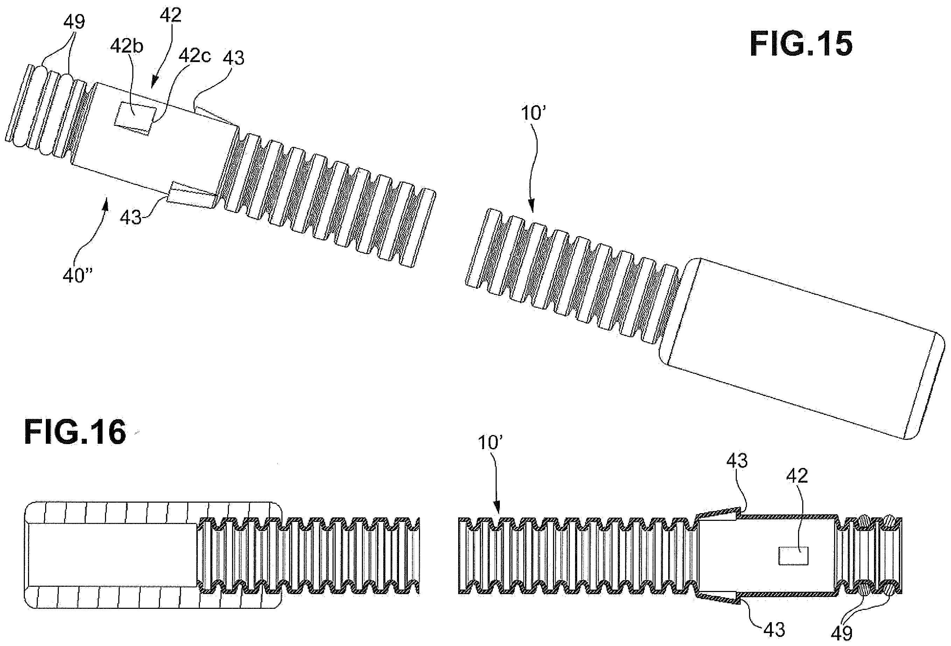

In the examples of figures 13-14, the gripping member is made as a proximal part of the sleeve 40'. In particular, the jaws 51" are made in one piece with the sleeve 40', and arranged at the proximal ends of the elastic flaps 42a. In particular, the jaws 51" are configured as teeth for gripping the hose 10' between adjacent waves 11' of the corrugated hose. Sealing rings 49 are arranged between adjacent waves 11' to the corrugated hose. In this regard, it should be noted that the position of the sealing ring 49 in figure 13 does not correspond to a real installation position. As known in the art and indicated in figure 13 for the outer hose 20, the sealing ring 49 may be fitted into a groove between two adjacent waves in which the width of the groove in the axial direction is of a size such as to accommodate the sealing ring so that the latter is in contact with the bottom of the groove; in other words, the distance between the waves adjacent to the groove should be approximately equal to the diameter of the section of the sealing ring 49. An example is shown in fig. 16.

In the examples of figures 15-16, the male tubular part 40" is not made as a sleeve separated from the hose, but as a part made in one piece with the hose itself.

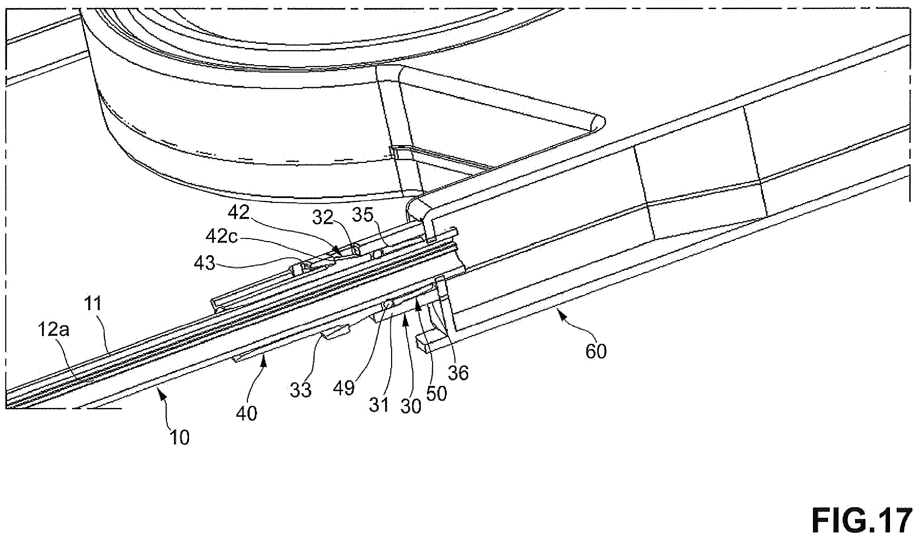

Figure 17 shows a connection system similar to that of the embodiment of figure 2, applied to connect a flexible hose to a water supply device of a washing machine, indicated with reference numeral 60. An example of such a device is described in EP 2 586 354 by the same Applicant. The female tubular part 30 therefore defines an inlet of the hydraulic hoses of the device 60.

As said above, the device 60 may also be a water treatment device, such as a softener or a device with ion exchange resins which allows the limescale present in the washing water to be reduced. Generally, as an alternative to the device 60, there may be any device which may be a simple container or tank or any hydraulic element, for example a flow switch, to which the hose 10 must be connected.

Of course, without altering the principle of the invention, the embodiments and the construction details may vary widely with respect to those described and illustrated purely by way of non-limiting example, without thereby departing from the scope of the invention as defined in the appended claims. In particular, elements described in relation to specific embodiments may be combined, where compatible, with elements described in relation to other embodiments.

## Claims

1. A non-demountable connection system for connecting a flexible hose (10; 10') to a hydraulic device (2; 60), comprising a female tubular part (30) associated to the hydraulic device (2; 60), a male tubular part (40) associated to the hose (10; 10') and fittable into the female tubular part (30) and at least one sealing ring (49) interposable between the hose (10; 10') and the female tubular part (30),
wherein the female tubular part (30) comprises a lateral wall (31) in which there is formed at least one snap fitting seat (32) arranged at a given axial distance (d) from a distal edge (33) of the female tubular part (30),
wherein the male tubular part (40) comprises a lateral wall (41), on an outer side of which there is formed at least one projection (42) configured to elastically fit into the snap fitting seat (32) and a distal shoulder (43) configured to be positioned in front of the distal edge (33) of the female tubular part (30),
wherein the connection system further comprises a proximal shoulder (42c) formed on the projection (42) and opposed to the distal shoulder (43),
wherein the connection system further comprises a gripping member (50) comprising a plurality of elastic jaws (51) for gripping an outer surface (11; 11') of the hose (10; 10'),
the connection system being **characterized in that** a flare (35) is formed on an inner surface (31a) of the lateral wall (31) of the female tubular part (30), the gripping member (50) being adapted to be arranged axially between a proximal edge (44) of the male tubular part (40) and said flare, and the sealing ring (49) being adapted to be arranged axially between the proximal edge (44) of the male tubular part (40) and the gripping member (50).

2. A system according to claim 1, wherein the proximal shoulder (42c) is arranged at an axial distance (D) from the distal shoulder (43) of the male tubular part (40) approximately equal to the distance (d) of the snap fitting seat (32) from the distal edge (33) of the female tubular part (30).

3. A system according to claim 1 or 2, wherein the sealing ring (49) is adapted to be arranged axially between a proximal edge (44) of the male tubular part (40) and said flare.

4. A system according to claim 1, wherein the gripping member (50) is of plastic material, metallic material, or a combination of said materials.

5. A system according to claim 4, wherein the jaws (51) are carried by an insert on which the gripping member (50) is co-molded.

6. A flexible hose with a connection system according to any of the preceding claims, wherein the hose (10) has a smooth radially outer surface (11), and wherein the male tubular part (40) consists of a sleeve through which the hose (10) is fitted.

7. A hose according to claim 6, wherein the hose (10) has a radially inner surface (12) on which at least one longitudinal rib (12a) is formed.

8. A flexible hose with a connection system according to any of claims from 1 to 5, wherein the hose (10') is a corrugated hose.

9. A flexible hose according to claim 8 with a connection system according to claim 4, wherein the male tubular part (40) consists of a sleeve through which the hose (10') is inserted, and wherein the jaws (51) are configured to grip the hose (10') between adjacent waves (11') of the corrugated hose (10').

10. A hydraulic device with a connection system according to any of claims 1 to 5 or with a flexible hose according to any of claims 6 to 9, wherein the hydraulic device is a valve (2).

11. A hydraulic device with a connection system according to any of claims from 1 to 5 or with a flexible hose according to any of claims 6 to 9, wherein the hydraulic device is a water supply and/or treatment device (60) of a household electrical appliance.

12. An anti-flooding device for a household electrical appliance, the device comprising a connector body (2), a first flexible hose (10; 10') and a second flexible hose (20), wherein in the connector body (2) there is defined a conduit (3) in fluid communication with the first hose (10; 10'), the first hose (10; 10') being provided for conveying water, wherein the first hose (10; 10') extends longitudinally within the second hose (20) in such a way so as to define an annular gap (21) between the two hoses, adapted to receive any possible water leakage, and wherein the first flexible hose (10; 10') is connected to the conduit (3) through a connection system according to any of claims 1 to 5.

13. A device according to claim 12, wherein the first flexible hose (10; 10') is a flexible hose according to any of claims 6 to 9.

## Patentansprüche

1. Nicht zerlegbares Verbindungssystem zum Verbinden eines flexiblen Schlauchs (10; 10') mit einer hydraulischen Vorrichtung (2; 60), aufweisend ein mit der hydraulischen Vorrichtung (2; 60) verbundenes rohrförmiges Aufnahmeteil (30), ein mit dem Schlauch (10; 10') verbundenes und in das rohrförmige Aufnahmeteil (30) einpassbares rohrförmiges Einsteckteil (40) und mindestens einen zwischen dem Schlauch (10; 10') und dem rohrförmigen Aufnahmeteil (30) einsetzbaren Dichtring (49),
wobei das rohrförmige Aufnahmeteil (30) eine Seitenwand (31) aufweist, in der mindestens ein in einem bestimmten Abstand (d) von einem distalen Rand (33) des rohrförmigen Aufnahmeteils (30) angeordneter Schnappsitz (32) ausgebildet ist,
wobei das rohrförmige Einsteckteil (40) eine Seitenwand (41) aufweist, an deren Außenseite mindestens ein Vorsprung (42), der dazu ausgelegt ist, elastisch in den Schnappsitz (32) zu passen, und ein distaler Anschlag (43) ausgebildet sind, der dazu ausgelegt ist, vor dem distalen Rand (33) des rohrförmigen Aufnahmeteils (30) angeordnet zu werden,
wobei das Verbindungssystem weiter einen an dem Vorsprung (42) ausgebildeten und dem distalen Anschlag (43) entgegengesetzten proximalen Anschlag (42c) aufweist,
wobei das Verbindungssystem weiter ein Greifelement (50) aufweist, das eine Vielzahl von elastischen Klemmbacken (51) zum Ergreifen einer Außenfläche (11; 11') des Schlauchs (10; 10') aufweist,
wobei das Verbindungssystem **dadurch gekennzeichnet ist, dass** an einer Innenfläche (31a) der Seitenwand (31) des rohrförmigen Aufnahmeteils (30) eine Aufweitung (35) ausgebildet ist, wobei das Greifelement (50) dazu ausgelegt ist, axial zwischen einem proximalen Rand (44) des rohrförmigen Einsteckteils (40) und der Aufweitung angeordnet zu werden und der Dichtring (49) dazu ausgelegt ist, axial zwischen dem proximalen Rand (44) des rohrförmigen Einsteckteils (40) und dem Greifelement (50) angeordnet zu werden.

2. System nach Anspruch 1, wobei der proximale Anschlag (42c) in einem axialen Abstand (D) von dem distalen Anschlag (43) des rohrförmigen Einsteckteils (40) angeordnet ist, wobei der axiale Abstand (D) in etwa dem Abstand (d) des Schnappsitzes (32) von dem distalen Rand (33) des rohrförmigen Aufnahmeteils (30) entspricht.

3. System nach Anspruch 1 oder 2, wobei der Dichtring (49) dazu ausgelegt ist, axial zwischen einem proximalen Rand (44) des rohrförmigen Einsteckteils (40) und der Aufweitung angeordnet zu sein.

4. System nach Anspruch 1, wobei das Greifelement (50) aus Kunststoff, metallischem Material oder einer Kombination beider Materialien ist.

5. System nach Anspruch 4, wobei die Klemmbacken (51) von einem Einsatz, an den das Greifelement (50) angeformt ist, getragen werden.

6. Flexibler Schlauch mit einem Verbindungssystem nach einem der vorangehenden Ansprüche, wobei der Schlauch (10) eine glatte radiale Außenfläche (11) aufweist und wobei das rohrförmige Einsteckteil (40) eine Hülse umfasst, durch welche der Schlauch (10) geführt wird.

7. Schlauch nach Anspruch 6, wobei der Schlauch (10) eine radiale Innenfläche (12) aufweist, auf welcher mindestens eine Längsrippe (12a) ausgebildet ist.

8. Flexibler Schlauch mit einem Verbindungssystem nach einem der Ansprüche 1 bis 5, wobei der Schlauch (10') ein Wellschlauch ist.

9. Flexibler Schlauch nach Anspruch 8 mit einem Verbindungssystem nach Anspruch 4, wobei das rohrförmige Einsteckteil (40) eine Hülse umfasst, durch welche der Schlauch (10') eingeführt wird, und wobei die Klemmbacken (51) so ausgelegt sind, dass sie den Schlauch (10') zwischen benachbarten Wellen (11') des Wellschlauchs (10') ergreifen.

10. Hydraulische Vorrichtung mit einem Verbindungssystem nach einem der Ansprüche 1 bis 5 oder mit einem flexiblen Schlauch nach einem der Ansprüche 6 bis 9, wobei die hydraulische Vorrichtung ein Ventil (2) ist.

11. Hydraulische Vorrichtung mit einem Verbindungssystem nach einem der Ansprüche 1 bis 5 oder mit einem flexiblen Schlauch nach einem der Ansprüche 6 bis 9, wobei die hydraulische Vorrichtung eine Wasserzufuhr- und/oder -aufbereitungsvorrichtung (60) eines elektrischen Haushaltsgeräts ist.

12. Überschwemmungsschutzvorrichtung für ein elektrisches Haushaltsgerät, wobei die Vorrichtung einen Anschlusskörper (2), einen ersten flexiblen Schlauch (10; 10') und einen zweiten flexiblen Schlauch (20) aufweist, wobei in dem Anschlusskörper (2) eine mit dem ersten Schlauch (10; 10') in Flüssigkeitsverbindung stehende Leitung (3) ausgebildet ist, wobei der erste Schlauch (10; 10') zum Durchleiten von Wasser vorgesehen ist, wobei der erste Schlauch (10; 10') sich derart in Längsrichtung innerhalb des zweiten Schlauchs (20) erstreckt, dass er einen Ringspalt (21) zwischen den beiden Schläuchen ausbildet, der dazu ausgelegt ist, etwaig austretendes Wasser aufzunehmen, und wobei der erste flexible Schlauch (10; 10') durch ein Verbindungssystem nach einem der Ansprüche 1 bis 5 mit der Leitung (3) verbunden ist.

13. Vorrichtung nach Anspruch 12, wobei der erste flexible Schlauch (10; 10') ein flexibler Schlauch nach einem der Ansprüche 6 bis 9 ist.

## Revendications

1. Système de connexion non démontable pour la connexion d'un tuyau souple (10 ; 10') à un dispositif hydraulique (2 ; 60), comprenant une partie tubulaire femelle (30) associée au dispositif hydraulique (2 ; 60), une partie tubulaire mâle (40) associée au tuyau (10 ; 10') et pouvant être ajustée dans la partie tubulaire femelle (30) et au moins une bague d'étanchéité (49) pouvant être interposée entre le tuyau (10 ; 10') et la partie tubulaire femelle (30),
dans lequel la partie tubulaire femelle (30) comprend une paroi latérale (31) dans laquelle est formé au moins un siège d'encliquetage (32) agencé à une distance axiale (d) donnée d'un bord distal (33) de la partie tubulaire femelle (30),
dans lequel la partie tubulaire mâle (40) comprend une paroi latérale (41), sur un côté externe duquel est formée au moins une saillie (42) configurée pour s'ajuster élastiquement dans le siège d'encliquetage (32) et un épaulement distal (43) configuré pour être positionné devant le bord distal (33) de la partie tubulaire femelle (30),
dans lequel le système de connexion comprend en outre un épaulement proximal (42c) formé sur la saillie (42) et opposé à l'épaulement distal (43),
dans lequel le système de connexion comprend en outre un élément de saisie (50) comprenant une pluralité de mâchoires (51) élastiques pour saisir une surface externe (11 ; 11') du tuyau (10 ; 10'),
le système de connexion étant **caractérisé en ce qu'**un évasement (35) est formé sur une surface interne (31a) de la paroi latérale (31) de la partie tubulaire femelle (30), l'élément de saisie (50) étant adapté pour être agencé axialement entre un bord proximal (44) de la partie tubulaire mâle (40) et ledit évasement, et la bague d'étanchéité (49) étant adaptée pour être agencée axialement entre le bord proximal (44) de la partie tubulaire mâle (40) et l'élément de saisie (50).

2. Système selon la revendication 1, dans lequel l'épaulement proximal (42c) est agencé à une distance axiale (D) de l'épaulement distal (43) de la partie tubulaire mâle (40) approximativement égale à la distance (d) du siège d'encliquetage (32) à partir du bord distal (33) de la partie tubulaire femelle (30).

3. Système selon la revendication 1 ou 2, dans lequel la bague d'étanchéité (49) est adaptée pour être agencée axialement entre un bord proximal (44) de la partie tubulaire mâle (40) et ledit évasement.

4. Système selon la revendication 1, dans lequel l'élément de saisie (50) est en matériau plastique, en matériau métallique, ou en une combinaison desdits matériaux.

5. Système selon la revendication 4, dans lequel les mâchoires (51) sont portées par un insert sur lequel l'élément de saisie (50) est co-moulé.

6. Tuyau souple présentant un système de connexion selon l'une quelconque des revendications précédentes, dans lequel le tuyau (10) a une surface externe radialement lisse (11), et dans lequel la partie tubulaire mâle (40) est constituée d'un manchon à travers lequel le tuyau (10) est ajusté.

7. Tuyau selon la revendication 6, dans lequel le tuyau (10) a une surface radialement interne (12) sur laquelle au moins une nervure longitudinale (12a) est formée.

8. Tuyau souple présentant un système de connexion selon l'une quelconque des revendications 1 à 5, dans lequel le tuyau (10') est un tuyau ondulé.

9. Tuyau souple selon la revendication 8 présentant un système de connexion selon la revendication 4, dans lequel la partie tubulaire mâle (40) est constituée d'un manchon à travers lequel le tuyau (10') est inséré, et dans lequel les mâchoires (51) sont configurées pour saisir le tuyau (10') entre des ondulations (11') adjacentes du tuyau ondulé (10').

10. Dispositif hydraulique présentant un système de connexion selon l'une quelconque des revendications 1 à 5 ou présentant un tuyau souple selon l'une quelconque des revendications 6 à 9, dans lequel le dispositif hydraulique est une soupape (2).

11. Dispositif hydraulique présentant un système de connexion selon l'une quelconque des revendications 1 à 5 ou présentant un tuyau souple selon l'une quelconque des revendications 6 à 9, dans lequel le dispositif hydraulique est un dispositif d'alimentation et/ou de traitement d'eau (60) d'un appareil électroménager.

12. Dispositif anti-inondation pour un appareil électroménager, le dispositif comprenant un corps de connecteur (2), un premier tuyau souple (10 ; 10') et un second tuyau souple (20), dans lequel dans le corps de connecteur (2) est défini un conduit (3) en communication fluidique avec le premier tuyau (10 ; 10'), le premier tuyau (10 ; 10') étant fourni pour transporter de l'eau, dans lequel le premier tuyau (10 ; 10') s'étend longitudinalement à l'intérieur du second tuyau (20) de manière à définir un espace annulaire (21) entre les deux tuyaux, adapté pour recevoir toute fuite d'eau possible, et dans lequel le premier tuyau souple (10 ; 10') est connecté au conduit (3) à travers un système de connexion selon l'une quelconque des revendications 1 à 5.

13. Dispositif selon la revendication 12, dans lequel le premier tuyau souple (10 ; 10') est un tuyau souple selon l'une quelconque des revendications 6 à 9.
